# FASCICULE DE BREVET EUROPEEN

(11) **EP 4 104 279 B1**
(45) Date de publication et mention de la délivrance du brevet: **15.11.2023**
(21) Numéro de dépôt: 21709068.7
(22) Date de dépôt: 09.02.2021
(51) Int. Cl.: H02K 9/22, H01B 1/02, H01B 3/18, H01B 7/42, H02K 55/00, H01B 7/08, H02K 3/02, H01B 3/30

(54) **ELÉMENT ÉLECTRIQUEMENT ET THERMIQUEMENT CONDUCTEUR ET PROCÉDÉ DE FABRICATION D'UN TEL ÉLÉMENT**
ELEKTRISCH UND THERMISCH LEITFÄHIGES ELEMENT UND VERFAHREN ZUR HERSTELLUNG EINES SOLCHEN ELEMENTS
ELECTRICALLY AND THERMALLY CONDUCTIVE ELEMENT AND METHOD FOR PRODUCING SUCH AN ELEMENT

(30) Priorité: 10.02.2020 FR 2001311
(43) Date de publication de la demande: 21.12.2022
(73) Titulaire: Absolut System, 38170 Seyssinet-Pariset (FR)
(72) Inventeur: TANCHON, Julien, 38180 SEYSSINS (FR)
(74) Mandataire: Regimbeau
(86) Numéro de dépôt international: PCT/FR2021/050230
(87) Numéro de publication internationale: WO 2021/160960

(56) Documents cités:
- WO-A1-2020/002817
- CN-A- 110 429 754
- CN-U- 204 946 585
- US-A1- 2019 027 988

## Description

### Domaine de l'invention

L'invention concerne un élément électriquement et thermiquement conducteur et un procédé de fabrication d'un tel élément.

### Etat de la technique

Il existe différents types de moteurs électriques (moteur à courant continu avec ou sans balais, moteurs à courant alternatif, synchrone ou asynchrone, moteur linéaire, moteur pas à pas...).

Dans tous les cas, l'induit du moteur comprend une ou plusieurs bobines constituées d'un enroulement d'un élément électriquement conducteur.

Le nombre de bobines dépend de la configuration du moteur et du nombre de pôles souhaité.

Dans la majorité des applications, l'élément électriquement et thermiquement conducteur consiste en un fil de cuivre. Le cuivre est en effet un bon conducteur électrique et également un bon conducteur thermique. Il peut donc transporter une forte quantité de courant avec une dissipation par effet Joule limitée. Sa bonne conductivité thermique permet également de refroidir les enroulements efficacement et donc d'augmenter la densité de courant dans les fils.

Pour les applications fonctionnant à hautes fréquences (alimentation alternative), les variations de courant électrique dans l'inducteur génèrent des pertes par courant de Foucault dans les éléments conducteurs de la bobine. Ces pertes sont surfaciques et peuvent être limitées par l'utilisation de fils de Litz. Un fil de Litz est un fil conducteur multibrins adapté au transport de courant à haute fréquence. Chaque fil est composé de brins isolés électriquement les uns des autres, diminuant ainsi l'intensité des courants de Foucault en surface.

Cependant, le cuivre est un matériau ayant une densité élevée.

Les applications spatiales et aéronautiques utilisant des moteurs électriques se développent fortement. Pour ces applications, la masse des moteurs est un facteur critique et l'utilisation de bobines en cuivre devient problématique. En effet, pour augmenter la puissance spécifique des moteurs (ou générateurs) il faut augmenter la densité de courant dans les bobines tout en baissant leur masse. Ces deux contraintes sont totalement antagonistes et le cuivre ne permet pas d'obtenir un compromis satisfaisant car l'augmentation de la densité de courant nécessite un refroidissement des enroulements et une augmentation de section des fils, qui ne sont pas compatibles avec une réduction de la masse.

Certaines bobines sont donc réalisées avec de l'aluminium comme élément électriquement et thermiquement conducteur en remplacement du cuivre.

L'aluminium présente une densité plus faible que le cuivre mais également une résistivité électrique plus élevée (donc une plus forte dissipation par effet Joule) et une conductivité thermique plus faible (impliquant un moins bon refroidissement des enroulements).

Un élément conducteur en aluminium n'est donc pas une solution totalement satisfaisante au problème posé.

US 2019/028988 A1 divulgue un conducteur électrique (en cuivre) entouré ou gainé par une couche de graphène.

### Résumé de l'invention

Un but de l'invention est donc de concevoir un élément électriquement et thermiquement conducteur qui permette d'optimiser la densité de courant circulant dans l'élément et la dissipation thermique de l'élément tout en en minimisant la masse.

Un objet de l'invention concerne un élément électriquement et thermiquement conducteur comprenant :
- un fil ou ruban d'aluminium de haute pureté,
- une bande de graphite pyrolytique ou de graphène s'étendant le long du ruban d'aluminium,
ledit fil ou ruban et la bande étant encapsulés ensemble dans une gaine d'un matériau électriquement isolant.

Par « haute pureté » on entend dans le présent texte une pureté supérieure à 99%.

Cet élément conducteur composite permet de bénéficier de la faible masse de l'aluminium tout en présentant des performances thermiques améliorées grâce au graphite pyrolytique.

Dans certains modes de réalisation, le matériau électriquement isolant de la gaine est un polyimide, tel que du Kapton^{™}.

Dans certains modes de réalisation, le fil ou ruban est isolé électriquement de la bande par une couche dudit matériau électriquement isolant.

Dans certains modes de réalisation, le ruban présente une épaisseur comprise entre 10 et 200 µm.

Dans certains modes de réalisation, la bande présente une épaisseur comprise entre 10 et 200 µm.

Dans certains modes de réalisation, la bande de graphite pyrolytique s'étend latéralement vers l'extérieur par rapport au ruban, ce qui permet de la coupler aisément à un système d'évacuation de la chaleur.

Un autre objet concerne une bobine comprenant au moins un enroulement d'un élément électriquement et thermiquement conducteur tel que décrit ci-dessus.

Un autre objet concerne une machine tournante comprenant au moins une telle bobine. Ladite machine comprend :
- un stator comprenant au moins une bobine telle que décrite ci-dessus,
- un rotor comprenant au moins un élément supraconducteur, le rotor étant mobile en rotation par rapport au stator, et
- un cryostat entourant le rotor pour maintenir l'élément supraconducteur à une température cryogénique, ledit cryostat étant fixe par rapport au stator.

Enfin, l'invention concerne également un procédé de fabrication d'un élément électriquement et thermiquement conducteur tel que décrit ci-dessus. Ledit procédé comprend :
- la fourniture d'un fil ou ruban d'aluminium de haute pureté,
- l'application d'une bande de graphite pyrolytique le long du fil ou ruban,
- le dépôt d'un matériau électriquement isolant de sorte à former une gaine encapsulant le fil ou ruban d'aluminium et la bande de graphite pyrolytique.

### Brève description des dessins

D'autres caractéristiques et avantages de l'invention ressortiront de la description détaillée qui va suivre, en référence aux dessins annexés sur lesquels :
- la figure 1 est une vue en perspective d'un élément conducteur selon un mode de réalisation de l'invention, à différentes étapes de sa fabrication ;
- la figure 2 est un schéma de principe d'une bobine incluant un élément conducteur selon l'invention ;
- la figure 3 est un schéma de principe d'une autre bobine incluant un élément conducteur selon l'invention ;
- la figure 4 est un schéma de principe d'une bobine incluant un élément conducteur selon l'invention, comprenant une liaison directe avec un système d'évacuation de la chaleur ;
- la figure 5 est un schéma de principe d'une bobine incluant un élément conducteur selon l'invention comprenant une liaison directe avec un système d'évacuation de la chaleur ;
- la figure 6 est un schéma de principe d'une bobine incluant un élément conducteur selon l'invention, combinant un fil d'aluminium de haute pureté et une bande de graphite pyrolytique encapsulés dans du polyimide ;
- la figure 7 est une vue en coupe d'une machine tournante cryogénique dont le stator comprend une bobine incluant un élément conducteur selon l'invention.

Des éléments désignés par un même signe de référence d'une figure à l'autre sont identiques ou remplissent la même fonction.

Pour des raisons de lisibilité des figures, les différents éléments ne sont pas nécessairement représentés à l'échelle.

### Description détaillée de modes de réalisation

L'invention propose un élément composite électriquement et thermiquement conducteur, c'est-à-dire combinant deux matériaux contribuant chacun à une propriété de l'élément.

Dans la suite du texte, on parlera d' « élément conducteur » dans un souci de concision mais il va de soi que cet élément est à la fois électriquement et thermiquement conducteur.

L'élément conducteur composite comprend un fil ou un ruban d'aluminium de haute pureté, assurant une bonne conduction électrique. Dans certains modes de réalisation, on peut choisir un fil présentant une section circulaire ou carrée. Cependant, de préférence, on choisit un ruban, qui présente une section rectangulaire dont la largeur est bien supérieure à l'épaisseur.

En effet, des feuilles d'aluminium de haute pureté et présentant une faible épaisseur (typiquement de 10 à 200 µm) se trouvent aisément sur le marché. Il est possible d'ajuster la largeur du ruban lors de la découpe de la feuille d'aluminium. Ce ruban électriquement conducteur de faible épaisseur limite ainsi le développement de courants de Foucault en surface qui sont particulièrement critiques sur les systèmes électromécaniques fonctionnant à haute vitesse (typiquement supérieure à 40Hz). Pour diminuer encore le développement de courants de Foucault, il est possible de réduire la largeur du ruban lors de la découpe de sorte à diminuer encore la surface dudit ruban électriquement conducteur. Selon les applications, la largeur du ruban peut être comprise entre 2 et 50 mm.

L'élément conducteur composite comprend en outre une bande de graphite pyrolytique qui s'étend le long du fil ou ruban d'aluminium.

Le graphite pyrolytique est un matériau synthétique formé de couches de graphène présentant des liaisons covalentes. Ce matériau présente un unique plan de clivage, dans lequel la conductivité thermique est très élevée. Ainsi, le graphite pyrolytique a une conductivité thermique environ trois fois supérieure à celle du cuivre et une densité cinq fois plus faible.

Encapsulée directement avec le fil ou ruban électriquement conducteur, la bande de graphite pyrolytique permet donc un refroidissement homogène sur toute la surface de l'enroulement avec des performances exceptionnelles.

L'utilisation d'aluminium de haute pureté permet de limiter l'augmentation de la résistivité électrique de l'enroulement en aluminium par rapport à celle du cuivre. La dissipation par effet Joule est plus importante qu'avec du cuivre, mais la bande de graphite pyrolytique directement encapsulée avec le fil ou ruban électriquement conducteur permet d'évacuer facilement cette dissipation thermique supplémentaire.

La bande de graphite pyrolytique peut présenter une largeur comprise entre 3 et 60 mm et une épaisseur comprise entre 10 et 200 µm.

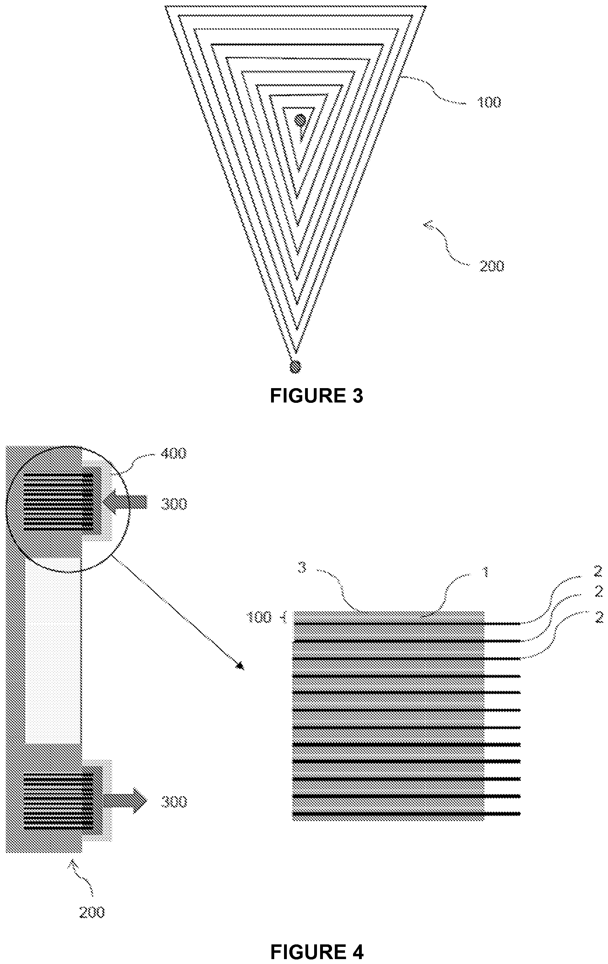

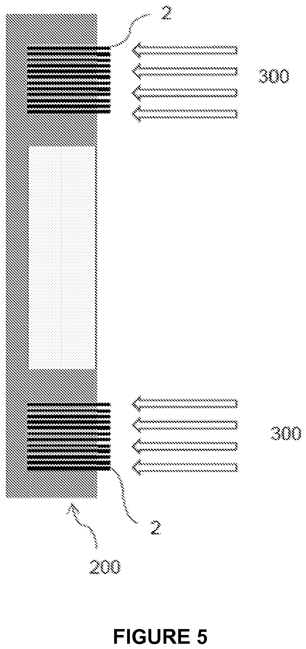

Dans certains modes de réalisation, la bande de graphite pyrolytique est plus large que le fil ou ruban d'aluminium. Ainsi, une portion latérale de la bande de graphite s'étend vers l'extérieur, ce qui permet une liaison directe à un système d'évacuation de la chaleur. Des exemples sont illustrés sur les figures 4 et 5 qui sont décrites en détail plus bas.

Pour assurer une isolation électrique entre le fil ou ruban d'aluminium et la bande thermiquement conductrice en graphite, et pour isoler électriquement l'élément conducteur un matériau électriquement isolant est utilisé. Ce matériau électriquement isolant peut être un polyimide, qui procure une encapsulation optimale des différents composants. Le Kapton^{™} est un polyimide formant un excellent isolant thermique ayant également une très bonne tenue à la température (ce qui est nécessaire pour l'isolant des enroulements). Il présente également l'avantage de s'utiliser sous forme liquide pour assurer une bonne encapsulation de l'ensemble des composants constituant le composite, d'être polymérisé après assemblage afin d'obtenir un composite flexible et parfaitement isolé électriquement, d'être déposable en couche mince (typiquement de l'ordre de 1 à 100 µm) afin de limiter l'épaisseur de l'élément conducteur composite. Cela permet d'augmenter le nombre de tours lors de la formation d'une bobine et donc le champ magnétique tout en baissant les gradients de température dans le conducteur composite.

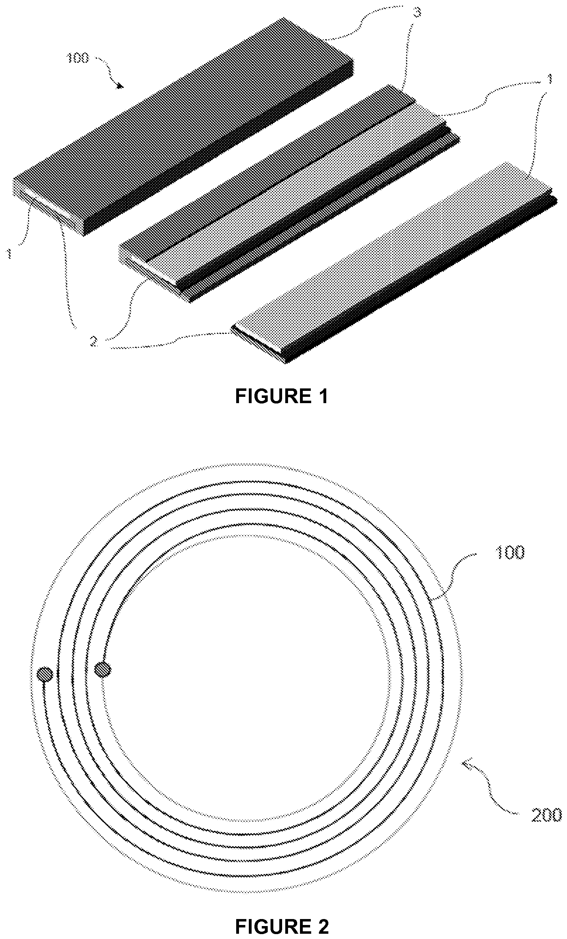

La figure 1 est une vue en perspective d'un élément conducteur selon un mode de réalisation de l'invention, à différentes étapes de sa fabrication.

Dans la partie droite de la figure sont représentés une portion d'un ruban 1 d'aluminium de haute pureté et d'une portion d'une bande 2 de graphite pyrolytique. L'élément conducteur étant destiné à former un enroulement, il présente une forme allongée dont la longueur est bien supérieure à sa largeur, ladite longueur étant typiquement de plusieurs dizaines de centimètres ou mètres.

Bien que non visible, une fine couche d'un matériau électriquement isolant est intercalée entre le ruban 1 et la bande 2, afin d'isoler électriquement le ruban 1 de la bande 2.

Dans la partie gauche de la figure est représentée une portion de l'élément conducteur composite 100, après encapsulation du ruban 1 et de la bande 2 dans une gaine de polyimide tel que du Kapton^{™}.

La construction de l'élément conducteur composite permet également d'être modulaire et d'adapter sa configuration en fonction de l'application finale. Par exemple, l'élément conducteur peut être constitué d'un empilement d'un ou plusieurs conducteurs thermiques et/ou électriques. Selon une forme d'exécution particulière, l'élément conducteur composite peut comprendre un fil ou ruban conducteur électrique en aluminium de haute pureté thermalisé par deux bandes de conducteur thermique (graphite pyrolytique) placées de part et d'autre. Selon une autre forme d'exécution particulière, l'élément conducteur composite peut comprendre deux fils ou rubans conducteurs électriques séparés par une bande de conducteur thermique en partie centrale...

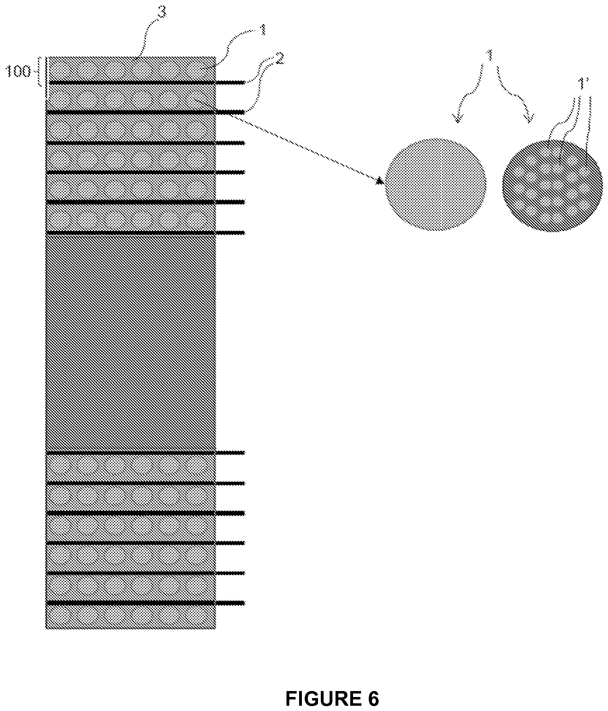

Dans le cas où l'élément conducteur électrique est un fil (monobrin, multibrin ou autre comme les fils de Litz), plusieurs enroulements dudit fil seront avantageusement bobinés sur la bande de graphite pyrolytique pour assurer une bonne dissipation thermique de chacun des fils. L'ensemble sera encapsulé avec du polyimide, notamment dans le cas où le fil n'est pas isolé électriquement). Dans le cas de l'utilisation d'un fil déjà isolé électriquement, l'encapsulation avec du polyimide ne sera pas nécessaire. La seule fonction de l'encapsulation sera alors d'assurer un bon couplage thermique entre les conducteurs thermiques et électriques ainsi qu'une cohésion entre les enroulements pour que la bobine garde sa forme. Dans ce cas, le polyimide peut être remplacé par toute autre colle conductrice thermiquement. Un exemple d'une telle configuration est illustré sur la figure 6 qui sera décrite en détail plus bas.

Au milieu de la figure 1 est représentée la portion de l'élément conducteur composite 100 en coupe partielle.

La fabrication dudit élément conducteur composite peut être effectuée de la manière suivante.

On fournit un fil ou un ruban d'aluminium de haute pureté.

On dépose sur ledit fil ou ruban une couche de polyimide à l'état liquide, puis on applique la bande de graphite pyrolytique sur la couche de polyimide qui assure ainsi une isolation électrique entre le fil ou ruban d'aluminium et la bande de graphite pyrolytique.

Puis on dépose à nouveau du polyimide à l'état liquide pour former une gaine enrobant entièrement le fil ou ruban 1 d'aluminium et la bande de graphite pyrolytique.

Cet élément conducteur composite permet de réaliser des bobines à forte densité de courant, faible masse et avec un refroidissement du ruban électriquement conducteur intégré.

Les bobines réalisées avec cet élément conducteur peuvent être plates et enroulées en spirales de forme circulaire (cf. figure 2), triangulaire (cf. figure 3) ou toute autre forme permettant d'assurer un facteur de remplissage optimum. Les disques illustrés à chaque extrémité de l'élément conducteur composite 100 représentent des éléments de connexion à un système d'alimentation électrique et à un système d'évacuation de la chaleur (non représentés).

L'élément conducteur composite pourra également être utilisé pour réaliser des bobines cylindriques de formes plus conventionnelles. Ce ruban composite assure dans ce cas un facteur de remplissage optimal par rapport aux éléments conducteurs circulaires classiques. Avec la solution proposée, la densité de champ magnétique est alors accrue du fait du nombre de tours plus important, la masse est baissée avec l'utilisation du ruban composite et la densité de puissance admissible fortement augmentée avec l'utilisation du graphite comme drain thermique.

La figure 4 illustre un mode de réalisation d'une bobine 200 comprenant un enroulement d'une pluralité de spires d'un élément conducteur composite 100. Comme on le voit sur la partie de droite qui présente une vue agrandie de la partie entourée par le cercle, l'élément conducteur composite comprend une bande 2 de graphite pyrolytique et un ruban 1 d'aluminium de haute pureté présentant une largeur inférieure à celle de la bande 2. Le ruban 1 et la partie de la bande 2 en regard de la bande 1 sont encapsulés dans une gaine 3 en polyimide. La partie de la bande 2 de graphite pyrolytique qui s'étend au-delà du ruban 1 n'est pas encapsulée dans la gaine 3. La bobine 200 est associée à un système d'évacuation de la chaleur 400 adapté pour la circulation d'un fluide de refroidissement 300 (eau, huile, etc.) entre une entrée et une sortie (schématisées par les flèches). La partie de la bande 2 de graphite pyrolytique qui s'étend au-delà du ruban 1 baigne dans le fluide 300, ce qui permet un refroidissement direct de l'enroulement.

La figure 5 illustre une alternative au mode de réalisation de la figure 4. L'élément conducteur composite est similaire à celui de la figure 4, mais l'évacuation de la chaleur est réalisée par un écoulement forcé d'un fluide de refroidissement 300 (air, etc.) du côté de la partie de la bande 2 de graphite pyrolytique qui s'étend au-delà du ruban 1 d'aluminium de haute pureté.

La figure 6 illustre un mode de réalisation d'une bobine 200 comprenant un enroulement d'une pluralité de spires d'un élément conducteur composite 100. Dans ce mode de réalisation, l'élément électriquement conducteur se présente sous la forme d'un fil. La partie droite de la figure présente deux formes d'exécution du fil 1, à savoir un fil monobrin en aluminium de haute pureté ou un fil de Litz comprenant une pluralité de brins 1' en aluminium de haute pureté encapsulés dans un matériau électriquement isolant. L'élément thermiquement conducteur est une bande 2 de graphite pyrolytique. Chaque fil 1 est encapsulé avec la bande 2 dans une gaine 3 en polyimide. Selon un mode de réalisation, plusieurs fils 1 sont agencés côte à côte sur la largeur de la bande 2 et encapsulés ensemble dans le polyimide. De manière avantageuse, une partie de la bande 2 de graphite pyrolytique s'étend au-delà de l'ensemble de fils 1 et de la gaine 3, permettant ainsi d'exposer cette partie de la gaine à un fluide de refroidissement, comme évoqué en relation avec les figures 4 et 5.

De telles bobines peuvent être avantageusement utilisées dans des machines tournantes, moteurs ou générateurs, notamment destinées à être embarquées dans des avions ou des satellites.

Ces machines tournantes peuvent notamment être des machines cryogéniques. Ces machines cryogéniques comprennent un stator et un rotor mobile en rotation par rapport au stator. Le rotor supporte au moins un élément supraconducteur, par exemple une bobine supraconductrice adaptée pour être alimentée électriquement par une source de tension alternative ou un ou plusieurs inserts magnétiques. En regard de l'élément supraconducteur, le stator supporte au moins une bobine incluant un élément conducteur selon l'invention. Contrairement à l'élément supraconducteur du rotor, la bobine du stator est opérationnelle à toute température, notamment la température ambiante. Le stator ne comprend aucun élément supraconducteur.

Le rotor est entouré par un cryostat permettant de maintenir l'élément supraconducteur à une température cryogénique, par exemple à une température comprise entre 20 et 80 K.

Le rotor comprend un arbre de sortie s'étendant selon l'axe de rotation du rotor. Ledit arbre de sortie est adapté pour être couplé à un arbre d'une machine à entraîner en rotation.

De manière connue en elle-même, le rotor est entraîné en rotation par un champ magnétique généré et contrôlé à la fois par le stator et le rotor.

Dans certains modes de réalisation, le cryostat est fixe par rapport au stator. Dans ce cas, la bobine du stator peut être agencé contre la surface extérieure du cryostat, voire à l'intérieur même du cryostat, ce qui permet de réduire la distance entre l'élément supraconducteur du rotor et la bobine du stator. Grâce à cette réduction de la distance, le champ magnétique auquel est soumis la bobine du stator est augmenté.

Le cryostat comprend une enceinte étanche à l'intérieur de laquelle on peut faire le vide. Par « vide » on entend dans le présent texte une pression inférieure ou égale à 1 mbar (soit inférieure ou égale à 100 Pa).

Le rotor est monté en rotation libre dans le cryostat, par l'intermédiaire d'au moins deux roulements. De préférence, lesdits roulements sont agencés aussi loin que possible de l'élément supraconducteur, afin de ne pas être affectés par le champ magnétique qu'il produit.

Par ailleurs, l'arbre de sortie est découplé vis-à-vis du cryostat par un joint tournant qui permet la rotation de l'arbre tout en garantissant l'étanchéité du cryostat.

Outre le gain en termes de distance entre l'élément supraconducteur et le stator, la conception de la machine tournante est simplifiée du fait de l'immobilité du cryostat. La durée de vie de la machine est ainsi allongée. En particulier, l'intégration d'un refroidisseur cryogénique est facilitée par rapport au cas d'un cryostat rotatif.

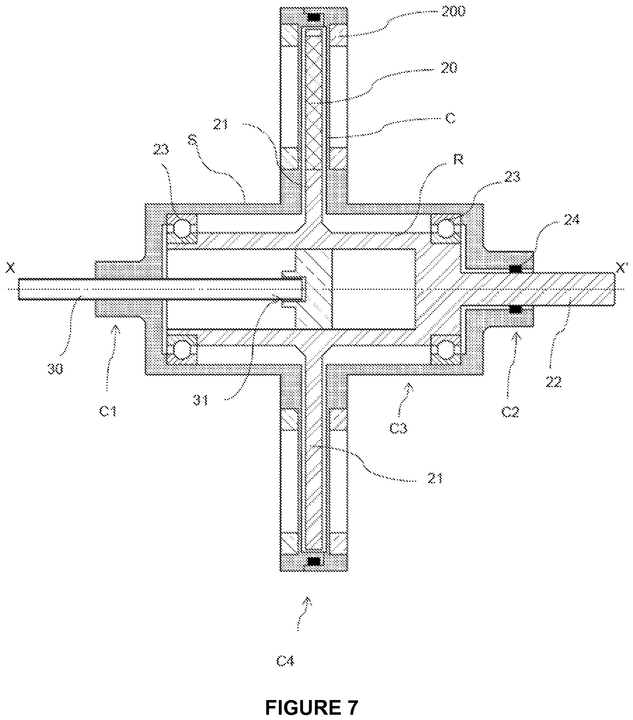

La figure 7 est une vue en coupe d'une telle machine cryogénique.

Le rotor est désigné par le repère R. Le rotor est mobile en rotation selon un axe XX' par rapport au stator (non représenté). Le stator S comprend au moins une bobine 200 comprenant un élément conducteur composite tel que décrit plus haut.

Le rotor présente une portion axiale qui se termine par un arbre de sortie 22. Le rotor comprend en outre une ou plusieurs ailes 21 s'étendant radialement à partir d'une portion axiale. Au moins une bobine supraconductrice 20 est agencée sur une aile respective. De manière alternative (non représentée), un ou des inserts magnétiques supraconducteurs pourraient être agencés sur une ou des ailes du rotor.

La bobine supraconductrice 20 est agencée en regard de la bobine 200 du stator.

Le cryostat C entoure le rotor R. Le cryostat présente une enceinte comprenant, le long de l'axe X-X', deux portions d'extrémité C1, C2 et une portion centrale C3 plus large que les portions d'extrémité.

Une première portion d'extrémité C1 comprend un passage pour un tube 30 permettant l'entrée et la sortie d'un fluide caloporteur dans le cryostat (l'architecture du circuit de fluide caloporteur n'est pas représentée dans le détail). Le tube 30 s'étend selon l'axe XX' et est en liaison fluidique avec un réservoir de fluide caloporteur (non représenté) Le tube 30 est solidaire du cryostat et assemblé de manière étanche à celui-ci ; il est découplé du rotor par un roulement (non représenté) agencé à l'interface 31 entre le rotor et le tube 30. De manière alternative, le tube 30 pourrait être solidaire du rotor ; dans ce cas, il faudrait prévoir un joint tournant à l'interface entre la portion d'extrémité C1 du cryostat et le tube 30.

Une seconde portion d'extrémité C2, opposée à la première le long de l'axe XX', comprend un passage pour l'arbre de sortie 22 du rotor. L'étanchéité entre l'arbre de sortie 22 et la portion C2 du cryostat est assurée par un joint tournant 24.

La portion centrale C3 du cryostat comprend un logement pour la portion axiale du rotor, le rotor étant monté libre en rotation dans la portion centrale C3 du cryostat par deux roulements 23. Les roulements 23 sont avantageusement placés au voisinage des deux extrémités de la portion centrale C3, de part et d'autre des ailes radiales 21 du rotor, pour maximiser la distance vis-à-vis du champ magnétique généré par la bobine supraconductrice. Le cryostat comprend une extension radiale C4 qui s'étend à partir de la portion centrale C3 (sensiblement au niveau du milieu de ladite portion centrale C3) en entourant les ailes 21 du rotor. Un faible entrefer est maintenu entre la surface intérieure de l'extension radiale du cryostat et la surface extérieure des ailes 21 du rotor pour permettre le passage du fluide caloporteur afin d'assurer un refroidissement efficace de la bobine supraconductrice. A titre purement indicatif, la largeur dudit entrefer peut être de l'ordre de 0,2 mm.

Par ailleurs, le cryostat peut inclure un logement pour la bobine 200, ladite bobine pouvant ainsi être en contact avec la surface extérieure de l'extension radiale 3D du cryostat, qui est fixe.

L'épaisseur du cryostat dans l'extension radiale C4 est relativement plus fine que celle du reste du cryostat, par exemple de l'ordre de 1 mm.

Ainsi, la distance entre la bobine supraconductrice 20 et la bobine 200 est égale à la somme de la largeur de l'entrefer et de l'épaisseur du cryostat. Cette distance peut être par exemple de l'ordre de 1,2 mm. Cela représente une réduction de l'ordre de 80% par rapport à un moteur supraconducteur où le cryostat tourne avec le rotor.

## Revendications

1. Elément électriquement et thermiquement conducteur (100) comprenant :
- un fil ou ruban (1) d'aluminium de haute pureté,
- une bande (2) de graphite pyrolytique ou de graphène s'étendant le long du fil ou ruban d'aluminium (1),
ledit fil ou ruban (1) et la bande (2) étant encapsulés ensemble dans une gaine (3) d'un matériau électriquement isolant.

2. Elément selon la revendication 1, dans lequel le matériau électriquement isolant de la gaine (3) est un polyimide, tel que du Kapton^{™}.

3. Elément selon l'une des revendications 1 ou 2, dans lequel le fil ou ruban (1) est isolé électriquement de la bande (2) par une couche dudit matériau électriquement isolant.

4. Elément selon l'une des revendications 1 à 3, dans lequel le ruban (1) présente une épaisseur comprise entre 10 et 200 µm.

5. Elément selon l'une des revendications 1 à 4, dans lequel la bande (2) présente une épaisseur comprise entre 10 et 200 µm.

6. Elément selon l'une des revendications 1 à 5, dans lequel la bande (2) de graphite pyrolytique s'étend latéralement vers l'extérieur par rapport au ruban (1).

7. Bobine (200) comprenant au moins un enroulement (100) d'un élément électriquement et thermiquement conducteur selon l'une des revendications 1 à 6.

8. Machine tournante comprenant au moins une bobine (200) selon la revendication 7.

9. Machine tournante cryogénique selon la revendication 8, comprenant :
- un stator comprenant au moins une bobine (200) selon la revendication 7,
- un rotor comprenant au moins un élément supraconducteur, le rotor étant mobile en rotation par rapport au stator, et
- un cryostat entourant le rotor pour maintenir l'élément supraconducteur à une température cryogénique, ledit cryostat étant fixe par rapport au stator.

10. Procédé de fabrication d'un élément électriquement et thermiquement conducteur (100), comprenant :
- la fourniture d'un fil ou ruban (1) d'aluminium de haute pureté,
- l'application d'une bande (2) de graphite pyrolytique le long du fil ou ruban (1),
- le dépôt d'un matériau électriquement isolant de sorte à former une gaine (3) encapsulant le fil ou ruban (1) d'aluminium et la bande (2) de graphite pyrolytique.

## Patentansprüche

1. Elektrisch und thermisch leitfähiges Element (100), das Folgendes umfasst:
- einen Draht oder Streifen (1) aus Aluminium mit hohem Reinheitsgrad,
- ein Band (2) aus pyrolytischem Graphit oder Graphen, das sich entlang des Aluminiumdrahts oder - streifens (1) erstreckt,
wobei der Draht oder Streifen (1) und das Band (2) zusammen in einer Umhüllung (3) aus einem elektrisch isolierenden Material eingekapselt sind.

2. Element nach Anspruch 1, wobei das elektrisch isolierende Material der Umhüllung (3) ein Polyimid, wie beispielsweise Kapton^{™}, ist.

3. Element nach einem der Ansprüche 1 oder 2, wobei der Draht oder Streifen (1) durch eine Schicht des elektrisch isolierenden Materials von dem Band (2) elektrisch isoliert ist.

4. Element nach einem der Ansprüche 1 bis 3, wobei der Streifen (1) eine Dicke von zwischen 10 und 200 µm aufweist.

5. Element nach einem der Ansprüche 1 bis 4, wobei das Band (2) eine Dicke von zwischen 10 und 200 µm aufweist.

6. Element nach einem der Ansprüche 1 bis 5, wobei das Band (2) aus pyrolytischem Graphit sich in Bezug auf den Streifen (1) seitlich nach außen erstreckt.

7. Spule (200), die mindestens eine Wicklung (100) eines elektrisch und thermisch leitfähigen Elements nach einem der Ansprüche 1 bis 6 umfasst.

8. Drehmaschine, die mindestens eine Spule (200) nach Anspruch 7 umfasst.

9. Kryogene Drehmaschine nach Anspruch 8, die Folgendes umfasst:
- einen Stator, der mindestens eine Spule (200) nach Anspruch 7 umfasst,
- einen Rotor, der mindestens ein supraleitfähiges Element umfasst, wobei der Rotor in Bezug auf den Stator drehbeweglich ist, und
- einen Kryostat, der den Rotor umgibt, um das supraleitfähige Element auf einer kryogenen Temperatur zu halten, wobei der Kyrostat in Bezug auf den Stator fest ist.

10. Verfahren zur Herstellung eines elektrisch und thermisch leitfähigen Elements (100), das Folgendes umfasst:
- Bereitstellen eines Drahts oder Streifens (1) aus Aluminium mit hohem Reinheitsgrad,
- Anbringen eines Bandes (2) aus pyrolytischem Graphit entlang des Drahts oder Streifens (1),
- Aufbringen eines elektrisch isolierenden Materials, derart dass eine Umhüllung (3) gebildet wird, die den Draht oder Streifen (1) aus Aluminium und das Band (2) aus pyrolytischem Graphit einkapselt.

## Claims

1. Electrically and thermally conductive element (100) comprising:
- a high-purity aluminum wire or tape (1),
- a strip (2) of pyrolytic graphite or graphene extending along the aluminum tape (1),
said wire or tape (1) and strip (2) being encapsulated together in a sheath (3) of an electrically insulating material.

2. Element according to claim 1, wherein the electrically insulating material of the sheath (3) is a polyimide, such as Kapton^{™}.

3. Element according to one of claims 1 or 2, wherein the wire or tape (1) is electrically insulated from the strip (2) by a layer of said electrically insulating material.

4. Element according to one of claims 1 to 3, in which the tape (1) has a thickness of between 10 and 200 µm.

5. Element according to one of claims 1 to 4, in which the strip (2) has a thickness of between 10 and 200 µm.

6. Element according to one of claims 1 to 5, in which the pyrolytic graphite strip (2) extends laterally outwardly from the tape (1).

7. A coil (200) comprising at least one winding (100) of an electrically and thermally conductive element according to one of claims 1 to 6.

8. Rotary machine comprising at least one coil (200) according to claim 7.

9. The cryogenic rotating machine of claim 8, comprising:
- a stator comprising at least one coil (200) according to claim 7,
- a rotor comprising at least one superconducting element, the rotor being rotatable relative to the stator, and
- a cryostat surrounding the rotor to maintain the superconducting element at a cryogenic temperature, said cryostat being fixed relative to the stator.

10. A method of manufacturing an electrically and thermally conductive element (100), comprising:
- providing a high-purity aluminum wire or tape (1),
- applying a strip (2) of pyrolytic graphite along the wire or tape (1),
- depositing an electrically insulating material to form a sheath (3) encapsulating the aluminum wire or tape (1) and the pyrolytic graphite strip (2).
